# EUROPÄISCHE PATENTSCHRIFT

(11) **EP 1 319 589 B1**
(45) Veröffentlichungstag und Bekanntmachung des Hinweises auf die Patenterteilung: **29.08.2007**
(21) Anmeldenummer: 02025166.6
(22) Anmeldetag: 11.11.2002
(51) Int. Cl.: B62D 65/00

(54) **Mehrfachschraubeinrichtung zum Befestigen eines Kfz-Rades an einer Radnabe oder dergleichen**
Multi-axle screwing apparatus for mounting a vehicle wheel
Dispositif de vissage multiple pour montage d'un roue de vehicule

(30) Priorität: 13.12.2001 DE 10161236
(43) Veröffentlichungstag der Anmeldung: 18.06.2003
(73) Patentinhaber: ThyssenKrupp Drauz Nothelfer GmbH, 74076 Heilbronn (DE)
(72) Erfinder: Rauland, Theo, 54317 Osburg (DE); Selzer, Irene, 66679 Losheim am See (DE)
(74) Vertreter: Dahlkamp, Heinrich-Leo

(56) Entgegenhaltungen:
- EP-A- 0 640 521
- US-A- 3 491 427
- US-A- 5 125 298
- US-A- 5 640 750
- US-B1- 6 196 089
- PATENT ABSTRACTS OF JAPAN vol. 008, no. 276 (M-346), 18. Dezember 1984 (1984-12-18) & JP 59 145671 A (NISSAN JIDOSHA KK), 21. August 1984 (1984-08-21)

## Beschreibung

Die Erfindung betrifft eine Mehrfachschraubeinrichtung zum Befestigen eines Kfz-Rades an einer Radnabe oder dergleichen, insbesondere im Zuge einer Montagelinie für die Fahrwerksmontage von Kraftfahrzeugen, wobei mehrere Winkelschrauber zwischen einer Grundplatte und einer Kopfplatte angeordnet sind, deren abgewinkelte, mit Steckschlüsseleinsätzen versehene Enden sich durch Löcher der Grundplatte erstrecken, wobei die Grundplatte eine Halteeinrichtung für das Kfz-Rad aufweist.

Die US 6196089 A zeigt eine gattungsgemäße Mehrfachschraubeinrichtung.

Andere Mehrfachschraubeinrichtungen sind aus der EP 0 640 521 B1 und aus der Praxis bekannt. In der Praxis werden an sich bekannte Winkelschrauber eingesetzt (DE 198 43 151 C2, DE 39 22 049 A1, DE 39 19 648 C2).

Im Zuge der Montagelinie wird ein zu montierendes Kfz-Rad von der Halteeinrichtung der Grundplatte aufgenommen und ausgerichtet. Danach werden fünf Befestigungsschrauben in zugeordnete Bohrungen des Kfz-Rades eingelegt. Anschließend wird das Kfz-Rad an die Radnabe herangeführt und dort passgerecht positioniert, sodass die Winkelschrauber die Befestigungsschrauben in die zugeordneten Gewindebohrungen eindrehen können.

Bei bekannten Ausführungen ist die Mehrfachschraubeinrichtung jeweils für einen bestimmten Lochkreisdurchmesser des Kfz-Rades ausgelegt. Sollen Kfz-Räder mit einem anderen Lochkreisdurchmesser montiert werden, muss die Mehrfachschraubeinrichtung insgesamt ausgetauscht werden. Dementsprechend muss eine entsprechende Anzahl von Mehrfachschraubeinrichtungen zur Verfügung gehalten werden.

Aufgabe der Erfindung ist es, eine Mehrfachschraubeinrichtung der eingangs beschriebenen Art so zu verbessern, dass damit Kfz-Räder mit unterschiedlichen Lochkreisdurchmessern montiert werden können.

Diese Aufgabe wird dadurch gelöst, dass jeder Winkelschrauben auf einem in Bezug auf die Radachse radial verstellbaren Führungsschlitten befestigt ist und dass die Löcher der Grundplatte eine radiale Verschiebung der Winkelschrauber zulassende Abmessungen besitzen. Durch Verstellen der Führungsschlitten in radiale Richtung werden auch die sich durch die Löcher der Grundplatte erstreckende Enden der Winkelschrauber in radialer Richtung verstellt und können damit an unterschiedliche Lochkreisdurchmesser verschiedener Kfz-Räder angepasst werden.

Aus Platzgründen sind die die Antriebe aufnehmenden Enden der Winkelschrauber in der Regel in zwei Ebenen zwischen der Grundplatte und der Kopfplatte angeordnet und erstrecken sich im Wesentlichen in gleiche Richtungen. Für derartige Fälle ist es zweckmäßig, wenn wenigstens einige Führungsschlitten an der Grundplatte und die anderen Führungsschlitten an der Kopfplatte geführt sind.

Im Übrigen kann jedem Führungsschlitten wenigstens ein an der Grundplatte bzw. an der Kopfplatte befestigter Stelltrieb zugenordnet sein. Vorzugsweise bestehen die Stelltriebe aus Kurzhubzylindern, die gegen eine vorgespannte Membran arbeiten.

In den meisten Fällen reicht es aus, wenn die sich durch die Löcher der Grundplatte erstreckenden Enden der Winkelschrauber auf zwei unterschiedliche Lochkreisdurchmesser einstellbar sind, z.B. auf die Lochkreisdurchmesser von 15" - und 16" - Kfz-Räder. Dann ist eine Ausführung vorteilhaft, bei der jeder Führungsschlitten zur Begrenzung seines Verstellweges zwischen zwei aus Kurzhubzylindern bestehenden Stelltrieben derart angeordnet ist, dass seine Stirnseiten an den Membranen der Kurzhubzylinder anliegen, wobei der eine Kurzhubzylinder sich in ausgefahrener Stellung und der andere Kurzhubzylinder sich in eingefahrener Stellung befindet. Die Verstellung erfolgt dann durch Betätigen des einen oder des anderen Kurzhubzylinders.

Damit das mit Befestigungsschrauben versehene Kfz-Rad unter Aufrechterhaltung der exakten Ausrichtung der Befestigungsschrauben relativ zu den Steckschlüsseleinsätzen zusammen mit der Mehrfachschraubeinrichtung an die Radnabe herangeführt werden kann, sollte die Halteeinrichtung für das Kfz-Rad aus an der Grundplatte schwenkbar gelagerten und einem zugeordneten Antrieb versehenen Radgreiferarmen bestehen. Zum Zentrieren des Kfz-Rades an der Radnabe kann auf der Grundplatte ein Zentrierdorn angeordnet sein.

Im Folgenden wird ein in der Zeichnung dargestelltes Ausführungsbeispiel erläutert; es zeigen:
- Fig. 1: in perspektivischer Darstellung eine Mehrfachschraubeinrichtung zum Befestigen eines Kfz-Rades an einer Radnabe o.dgl.,
- Fig. 2: eine Draufsicht auf die Oberseite des Gegenstandes nach Fig. 1,

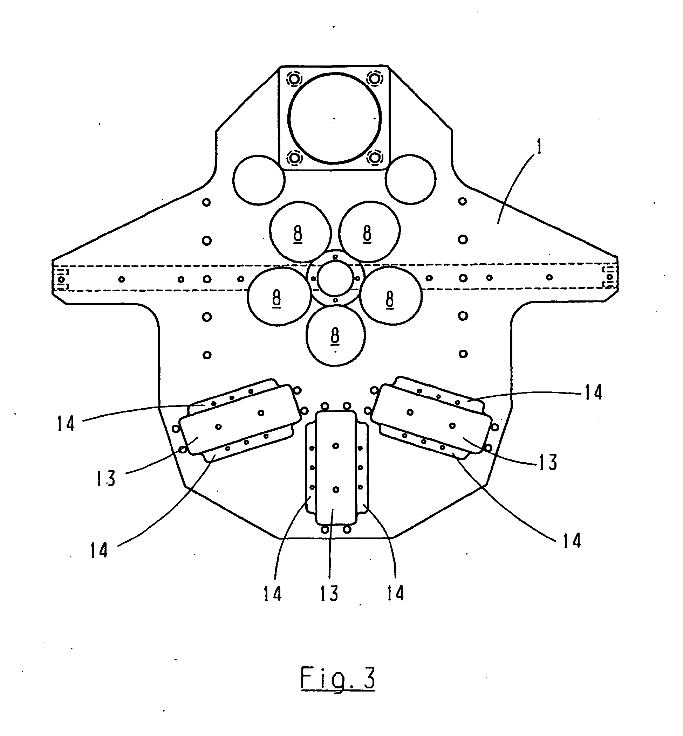

- Fig. 3: eine Draufsicht auf die Unterseite der Grundplatte,

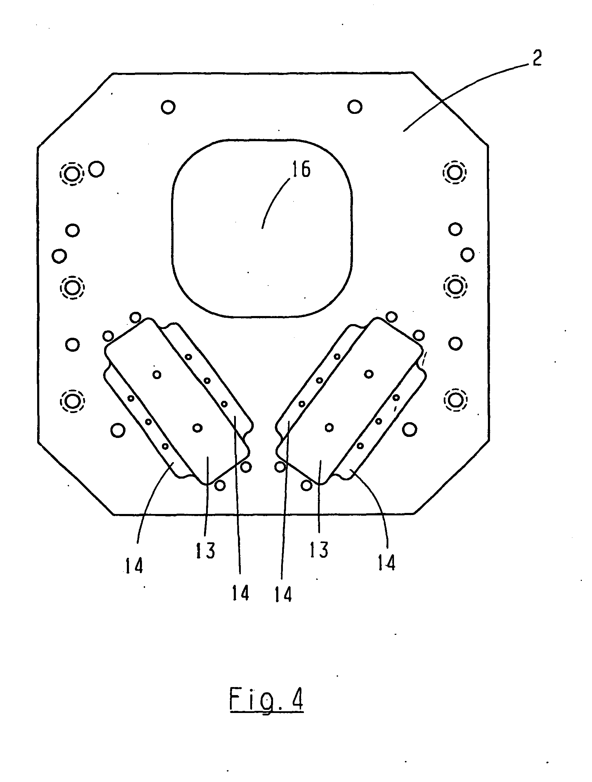

- Fig. 4: eine Draufsicht auf die Oberseite der Kopfplatte,
- Fig. 5: einen Vertikalschnitt durch den Gegenstand nach Fig. 1.

Die in der Zeichnung dargestellte Mehrfachschraubeinrichtung dient zum Montieren und Befestigen eines nicht dargestellten Kfz-Rades an einer Radnabe. Die Mehrschraubeinrichtung ist mit mehreren gleichartigen im Zuge einer Montagelinie für die Fahrwerksmontage von Kraftfahrzeugen angeordnet. Sie wird mit Hilfe eines nicht dargestellten Roboters bewegt.

Zu der Mehrfachschraubeinrichtung gehören eine Grundplatte 1 und eine im Abstand davon angeordnete Kopfplatte 2, die mit der Grundplatte 1 fest verbunden ist. Auf der Oberseite der Grundplatte 1 sind zwei einander gegenüberliegende Radgreiferarme 3 angeordnet, die in Führungen 4 mit Hilfe einer Antriebseinheit 5 und davon ausgehenden Hebelgetrieben 6 gegeneinander bzw. voneinander wegbewegbar sind. Mittig zwischen den beiden Radgreiferarmen 3 befindet sich ein Zentrierdorn 7, mit dem ein zwischen den beiden Radgreiferarmen 3 gehaltenes Kfz-Rad bei der Montage im Hinblick auf eine nicht dargestellten Radnabe zentriert wird.

Die Grundplatte 1 weist mehrere auf einem Teilkreis um den Zentrierdorn 7 angeodnete Löcher 8 auf, durch die sich abgewinkelte Enden 9 von Winkelschraubern 10 erstrecken. Der Durchmesser der Löcher 8 ist größer als der Durchmesser der abgewinkelten Enden 9. Alternativ können die Löcher 8 auch als Längslöcher ausgebildet sein, um eine lineare Bewegung der Enden 9 in radialer Richtung zu ermöglichen. Die abgewinkelten Enden 9 tragen endseitig jeweils einen Steckschlüsseleinsatz 11. In einigen dieser Steckschlüsseleinsätze 11 sind bereits Befestigungsschrauben 12 eingesetzt, mit denen das Kfz-Rad mit der nicht dargestellten Radnabe verschraubt wird.

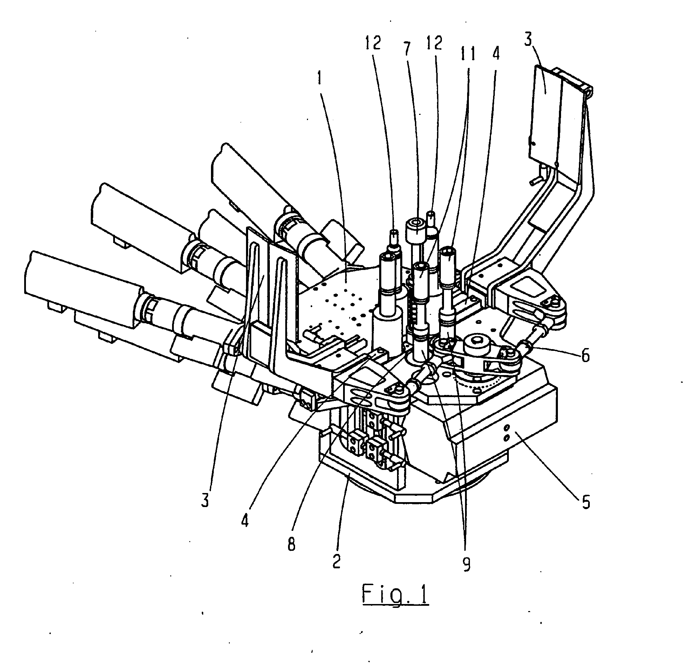

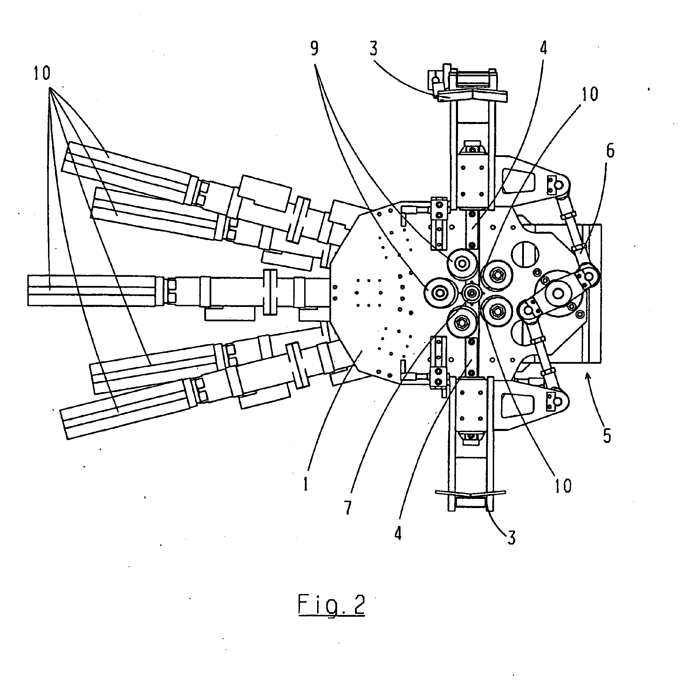

Die Winkelschrauber 10 sind zwischen der Grundplatte 1 und der Kopfplatte 2 in zwei Ebenen übereinander angeordnet. In der der Grundplatte 1 benachbarten Ebene sind drei Winkelschrauber 10 angeordnet, in der der Kopfplatte 2 benachbarten Ebene sind zwei Winkelschrauber 10 angeordnet. Alle Winkelschrauber 10 erstrecken sich im Wesentlichen in die gleiche Richtung (siehe Figuren 1 und 2).

Jeder Winkelschrauber 10 ist auf einem Führungsschlitten 13 befestigt, der in Bezug auf die durch den Zentrierdorn 7 definierte Radachse 16 und das den betreffenden Winkelschrauben 10 zugeordnete Loch 8 in der Grundplatte 1 in radialer Richtung verstellbar ist.

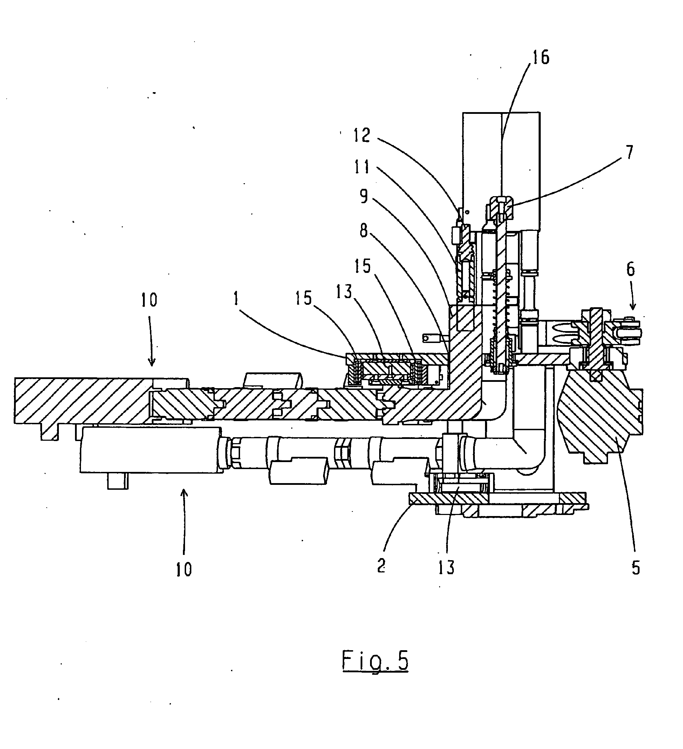

Aus Fig. 5 entnimmt man, dass den drei in der der Grundplatte 1 benachbarten Ebene angeordneten Winkelschraubern 10 Führungsschlitten 13 zugeordnet sind, die an der Unterseite der Grundplatte 1 geführt sind. Aus Fig. 5 entnimmt man auch, dass die Führungsschlitten 13 für die beiden in der der Kopfplatte 2 benachbarten Ebene angeordneten Winkelschrauber 10 an der Oberseite der Kopfplatte 1 geführt sind. Die Führungsschlitten 13 werden jeweils in Führungsschienen 14 geführt, die an der Unterseite der Grundplatte 1 bzw. an der Oberseite der Kopfplatte 2 befestigt sind.

Jeder Führungsschlitten 13 ist zwischen zwei an der Grundplatte 1 bzw. an der Kopfplatte 2 befestigten Stelltrieben 15 angeordnet. Bei der dargestellten Ausführung bestehen die Stelltriebe 15 aus Kurzhubzylindern, die gegen eine vorgespannte Membran arbeiten. Die Anordnung ist derart, dass jeder Führungschlitten 13 zur Begrenzung seines Verstellweges zwischen den beiden zugeordneten Stelltrieben 15 derart angeordnet ist, dass seine Stirnseiten an der Membran der Kurzhubzylinder anliegen, wobei der eine Kurzhubzylinder sich in ausgefahrener Stellung und der andere Kurzhubzylinder sich in eingefahrener Stellung befindet. Durch Betätigen des einen oder des anderen Stelltriebes wird der betreffende Führungsschlitten in die eine oder in die andere Position bewegt, wobei dementsprechend die abgewinkelten Enden 9 mit den Steckschlüsseleinsätzen 11 der Winkelschrauber 10 in ihren zugeordneten Löchern 8 der Grundplatte 1 radial in Bezug auf die durch den Zentrierdorn 7 definierte Radachse 16 verstellt werden. Dadurch ist auf einfache Weise eine Anpassung der Mehrfachschraubeinrichtung an unterschiedliche Lochkreisdurchmesser des Kfz-Rades möglich.

Die dargestellte Mehrfachschraubeinrichtung arbeitet wie folgt:

Ein nicht dargestellter Roboter bringt die Mehrfachschraubeinrichtung in eine Position zur Übernahme des nicht dargestellten Kfz-Rades. Entweder sind die Befestigungsschrauben des Kfz-Rades bereits in die zugeordneten Löcher der Felge eingesetzt oder sie sind in die Steckschlüsseleinsätze 11 eingesetzt. Das Kfz-Rad wird jedenfalls mit einer anderen Vorrichtung oder einem anderen Roboter so auf die Mehrfachschraubeinrichtung gesetzt, dass die Steckschlüsseleinsätze 11 mit den Löchern für die Befestigungsschrauben 12 fluchten. In dieser Position wird das Kfz-Rad nach Betätigen der Antriebseinheit 5 von den Radgreiferarmen gehalten. Anschließend wir die Mehrfachschraubeinrichtung zusammen mit dem aufgenommenen Kfz-Rad zur Radnabe bewegt und das Kfz-Rad wird mit der Radnabe verschraubt.

Sollen Kfz-Räder mit einem anderen Lochkreisdurchmesser montiert werden, genügt es, die Stelltriebe 15 der Führungsschlitten 13 entsprechend zu betätigen.

### Bezugszeichenliste:

- 1: Grundplatte
- 2: Kopfplatte
- 3: Radgreiferarme
- 4: Führungen
- 5: Antriebseinheit
- 6: Hebelgetriebe
- 7: Zentrierdorn
- 8: Löcher
- 9: abgewinkelte Enden
- 10: Winkelschrauber
- 11: Steckschlüsseleinsatz
- 12: Befestigungsschrauben
- 13: Führungsschlitten
- 14: Führungsschienen
- 15: Stelltrieb
- 16: Radachse

## Patentansprüche

1. Mehrfachschraubeinrichtung zum Befestigen eines Kfz-Rades an einer Radnabe oder dergleichen, insbesondere im Zuge einer Montagelinie für die Fahrwerksmontage von Kraftfahrzeugen, wobei mehrere Winkelschrauber (10) zwischen einer Grundplatte (1) und einer Kopfplatte (2) angeordnet sind, deren abgewinkelte, mit Steckschlüsseleinsätzen (11) versehene Enden (9) sich durch Löcher (8) der Grundplatte (1) erstrecken, wobei die Grundplatte (1) eine Halteeinrichtung für das Kfz-Rad aufweist, **dadurch gekennzeichnet, dass** jeder Winkelschrauber (10) auf einem in Bezug auf die Radachse (16) radial verstellbaren Führungschlitten (13) befestigt ist, und dass die Löcher (8) der Grundplatte (1) eine radiale Verschiebung der Winkelschrauber (10) zulassende Abmessungen besitzen.

2. Mehrfachschraubeinrichtung nach Anspruch 1, **dadurch gekennzeichnet, dass** wenigstens einige Führungsschlitten (13) an der Grundplatte (1) und die anderen Führungsschlitten (13) an der Kopfplatte (2) geführt sind.

3. Mehrfachschraubeinrichtung nach Anspruch 1 oder 2, **dadurch gekennzeichnet, dass** jedem Führungsschlitten (13) wenigstens ein an der Grundplatte (1) bzw. an der Kopfplatte (2) befestigter Stelltrieb (15) zugeordnet ist.

4. Mehrfachschraubeinrichtung nach einem der Ansprüche 1 bis 3, **dadurch gekennzeichnet, dass** die Stelltriebe (15) aus Kurzhubzylindern bestehen, die gegen eine vorgespant Membran arbeiten.

5. Mehrfachschraubeinrichtung nach Anspruch 4, **dadurch gekennzeichnet, dass** jeder Führungsschlitten (13) zur Begrenzung seines Verstellweges zwischen zwei Stelltrieben (15) derart angeordnet ist, dass seine Stirnseiten an den Membranen der Kurzhubzylinder anliegen, wobei der eine Kurzhubzylinder sich in ausgefahrener Stellung und der andere Kurzhubzylinder sich in eingefahrener Stellung befindet.

6. Mehrfachschraubeinrichtung nach Anspruch 1, **dadurch gekennzeichnet, dass** die Halteeinrichtung für das Kfz-Rad aus an der Grundplatte (1) schwenkbar oder verschiebbar gelagerten und mit einem zugeordneten Antrieb (5) versehenen Radgreiferarmen (3) besteht.

7. Mehrfachschraubeinrichtung nach einem der Ansprüche 1 bis 6, **dadurch gekennzeichnet, dass** auf der Grundplatte (1) ein Zentrierdorn (7) zum Zentrieren des Kfz-Rades an der Radnabe oder dergleichen angeordnet ist.

## Claims

1. A multi-axle screwing apparatus for fastening a vehicle wheel to a wheel hub or the like, more particularly in the course of an assembly line for the assembly of vehicle chassis, with several angular screwing devices (10) being arranged between a base plate (1) and a top plate (2), whose angled ends (9) provided with socket wrench inserts (11) extend through holes (8) of the base plate (1) and wherein the base plate (1) has a holding device for the vehicle wheel, **characterized in that** each angular screwing device (10) is fastened to a guiding carriage (13) which is radially adjustable in relation to the wheel axle (16), and **in that** the holes (8) of the base plate (1) have dimensions which allow for a radial displacement of the angular screwing device (10).

2. A multi-axle screwing apparatus as defined in Claim 1, **characterized in that** at least some of the guiding carriages (13) are guided at the base plate (1) and that the other guiding carriages (13) are guided at the top plate (2).

3. A multi-axle screwing apparatus as defined in Claim 1 or 2, **characterized in that** at least one actuator drive (15) fastened to the base plate (1) and/or to the top plate (2) is allocated to each guiding carriage (13).

4. A multi-axle screwing apparatus as defined in any one of the preceding Claims 1 to 3, **characterized in that** the actuator drives (15) are comprised of short stroke cylinders which work against a membrane.

5. A multi-axle screwing apparatus as defined in Claim 4, **characterized in that** each guiding carriage (13) for limitation of its resetting path between two actuator drives (13) is so arranged that its front-end sides lean to the membranes of the short stroke cylinders, with one short stroke cylinder being in extended position and the other short stroke cylinder being in retracted position.

6. A multi-axle screwing apparatus as defined in Claim 1, **characterized in that** the holding device for the vehicle wheel is comprised of wheel gripper arms (3) arranged in a pivotable or slewable configuration to the base plate (1) and equipped with an allocated drive (5).

7. A multi-axle screwing apparatus as defined in any one of the preceding claims 1 to 6, **characterized in that** a centering pin (7) for centering the vehicle wheel at the wheel hub or the like is arranged on the base plate (1).

## Revendications

1. Dispositif de vissage multiple pour fixer une roue de véhicule à un moyeu de roue ou autre, en particulier sur une ligne de montage pour trains roulants de véhicules automobiles, plusieurs visseuses angulaires (10) étant ménagées entre une plaque de base (1) et une plaque supérieure (2), dont les extrémités coudées (9) et pourvues de clés à douille (11) traversent des trous (8) de la plaque de base (1), la plaque de base (1) présentant un dispositif de retenue pour la roue de véhicule, **caractérisé en ce que** chaque visseuse angulaire (10) est fixée sur un coulisseau (13) déplaçable dans le sens radial par rapport à l'axe de roue (16) et que les trous (8) de la plaque de base (1) ont des dimensions permettant un déplacement radial des visseuses (10).

2. Dispositif de vissage multiple selon la revendication 1, **caractérisé en ce qu'**au moins quelques-uns des coulisseaux (13) se déplacent sur la plaque de base (1) et que les autres coulisseaux (13) se déplacent sur la plaque supérieure (2).

3. Dispositif de vissage multiple selon la revendication 1 ou 2, **caractérisé en ce qu'**au moins un actionneur (15) fixé à la plaque de base (1) ou à la plaque supérieure (2) est affecté à chaque coulisseau (13).

4. Dispositif de vissage multiple selon une des revendications 1 à 3, **caractérisé en ce que** les actionneurs (15) sont des vérins à faible course qui agissent contre une membrane précontrainte.

5. Dispositif de vissage multiple selon la revendication 4, **caractérisé en ce que** chaque coulisseau (13) est ménagé entre deux actionneurs (15) pour limiter sa course de déplacement de manière telle que ses faces avant adhèrent aux membranes des vérins à faible course, l'un des vérins à faible course se trouvant en position sortie et l'autre vérin à faible course en position rentrée.

6. Dispositif de vissage multiple selon la revendication 1, **caractérisé en ce que** le dispositif de retenue pour la roue de véhicule est constitué de grappins de retenue de roue (3) pivotant ou se déplaçant sur la plaque de base (1) et pourvus d'un moteur (5) correspondant.

7. Dispositif de vissage multiple selon une des revendications 1 à 6, **caractérisé en ce qu'**un mandrin de centrage (7) pour centrer la roue de véhicule au moyeu de roue ou autre est ménagé sur la plaque de base (1).
